# EUROPÄISCHE PATENTSCHRIFT

(11) **EP 1 340 975 B1**
(45) Veröffentlichungstag und Bekanntmachung des Hinweises auf die Patenterteilung: **19.07.2006**
(21) Anmeldenummer: 03001839.4
(22) Anmeldetag: 29.01.2003
(51) Int. Cl.: G01N 27/416, G01N 27/333

(54) **Sensoren zur Bestimmung von sauren oder basischen Gasen und Verfahren zur Herstellung solcher Sensoren**
Sensors for determining acid or alkaline gases and method for producing such sensors
Capteurs pour déterminer des gaz acides ou basiques et procédé de fabrication desdits capteurs

(30) Priorität: 28.02.2002 DE 10208648
(43) Veröffentlichungstag der Anmeldung: 03.09.2003
(73) Patentinhaber: ROBERT BOSCH GMBH, 70442 Stuttgart (DE)
(72) Erfinder: Brinz, Thomas, 73266 Bissingen Unter Der Teck (DE); Lewis, Jane, 70839 Gerlingen (DE); Mcmurray, Neil, Trebotz, SA5 7DA Swansea, Wales (GB)

(56) Entgegenhaltungen:
- DE-A- 4 430 662
- US-A- 5 376 255
- US-A- 5 607 573
- US-A- 5 841 021
- TSUKADA K ET AL: "AN INTEGRATED CHEMICAL SENSOR WITH MULTIPLE ION AND GAS SENSORS" SENSORS AND ACTUATORS B, ELSEVIER SEQUOIA S.A., LAUSANNE, CH, Bd. B02, Nr. 4, 1. Oktober 1990 (1990-10-01), Seiten 291-295, XP000163052 ISSN: 0925-4005

## Beschreibung

### Stand der Technik

Die Erfindung bezieht sich auf einen Sensor nach Anspruch 1 sowie auf ein Verfahren zur Herstellung desselben und dessen Verwendung.

Optische Sensoren zur Bestimmung des Kohlendioxidgehalts der Luft werden unter anderem in Brandmeldern eingesetzt. Ihre Funktion beruht darauf, daß eine auf Kohlendioxid sensitive Schicht bei Kontakt mit dem zu bestimmenden Gas ihre Farbe reversibel ändert. Diese Farbänderung wird durch einen Detektor erfaßt und bei Überschreitung einer festgelegten Mindestkonzentration wird ein Alarm ausgelöst. Diese Meßmethode ist relativ anfällig für Verschmutzungen.

Aus der US-PS 6,241,873 B1 ist ein Kohlendioxidsensor bekannt, der auf potentiometrischem Wege den Kohlendioxidgehalt einer Umgebungsatmosphäre erfaßt. Er weist eine Meß- und eine Referenzelektrode auf, die auf einem Substrat aufgebracht sind. Die Meßelektrode ist als Silber/Silbercarbonatelektrode ausgeführt. Das Potential dieser Elektrode hängt direkt von der Kohlendioxidkonzentration der Umgebung ab. Nachteilig an dieser Messmethode ist, dass carbonathaltige Elektroden durch Witterungseinflüsse in Mitleidenschaft gezogen werden und so nur eine geringe Standfestigkeit aufweisen. Weiterhin ist der Sensor auf die Messung von Kohlendioxid beschränkt.

Aus der US 5,376,255 A ist ein weiterer Kohlendioxidsensor bekannt, der eine Mess- und eine Referenzelektrode aufweist sowie eine Polymerschicht, die in Kontakt mit dem Gasgemisch und der Messelektrode steht. Als Messelektrode wird eine pH-sensitive Elektrode aus Iridiumoxid verwendet. Diese ist durch die Polymerschicht zumindest weitgehend vom Gasgemisch abgeschirmt.

Der vorliegenden Erfindung liegt die Aufgabe zugrunde, einen Gassensor zur Bestimmung verschiedener Gase auf potentiometrischem Wege bereitzustellen, der eine hohe Standfestigkeit bei gleichzeitig hoher Empfindlichkeit aufweist.

### Vorteile der Erfindung

Der erfindungsgemäße Sensor hat den Vorteil, dass dessen Elektroden langzeitstabil sind und dessen Messelektrode eine hohe Empfindlichkeit gegenüber dem zu bestimmenden Gas aufweist. Dies wird erreicht, indem als Messelektrode eine pH-sensitive Elektrode verwendet wird, die den pH-Wert eines sie umgebenden Polymers erfasst. Derartige pH-Elektroden weisen eine ausreichende Langlebigkeit auf und ermöglichen die Bestimmung verschiedener saurer Gase.

Mit den in den Unteransprüchen aufgeführten Maßnahmen sind vorteilhafte Weiterbildungen des erfindungsgemäßen Sensors möglich.

So eignet sich als Messelektrode insbesondere eine Iridiumoxidelektrode, da sie besonders robust gegenüber Umwelteinflüssen ist und nicht vorgequollen vorliegen muss wie vergleichbare Glaselektroden.

Des Sensor umfasst ein Polymer, das eine Base aufweist, da diese zu einer raschen und effektiven Absorption des zu bestimmenden sauren Gases führen. Dies erhöht die Empfindlichkeit und verringert die Ansprechzeit des Sensors weiter.

### Zeichnung

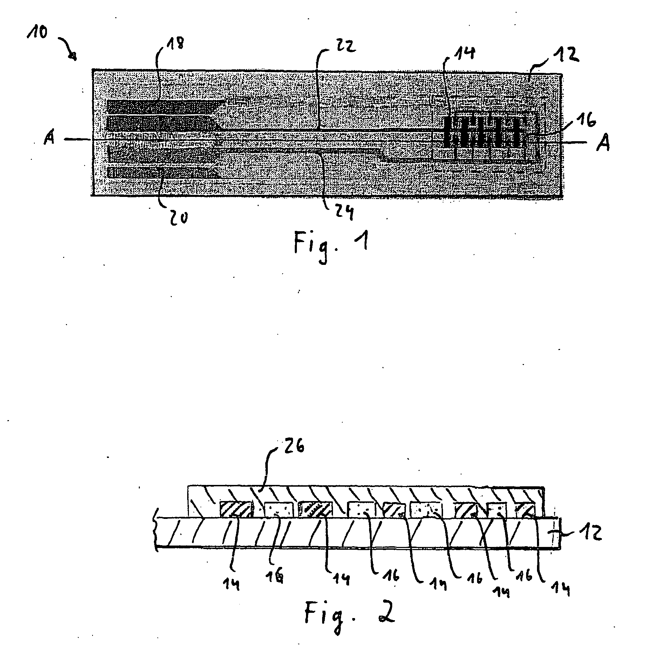

Figur 1 zeigt eine schematische Darstellung eines Ausführungsbeispiels des erfindungsgemäßen Sensors in der Draufsicht und Figur 2 eine Schnittdarstellung durch den in Figur 1 dargestellten Sensor entlang der Schnittlinie A--A.

### Ausführungsbeispiel

Der in Figur 1 und 2 dargestellte Sensor 10 umfaßt ein Substrat 12, daß vorzugsweise aus einem keramischen Material, wie beispielsweise Aluminimoxid, besteht. Auf diesem ist eine Meßelektrode 14 vorzugsweise in Form einer sogenannten Interdigitalelektrode vorgesehen. Diese bildet eine kammartige Struktur. Weiterhin ist auf dem Substrat eine Referenzelektrode 16 angeordnet, die bevorzugt ebenfalls als Interdigitalelektrode ausgeführt ist, wobei die Fortsätze der kammartig ausgeführten Referenzelektrode 16 in die Fortsätze der kammartig ausgeführten Meßelektrode 14 greifen. Dies gewährleistet eine geringe Distanz zwischen Meß- und Referenzelektrode 14, 16 und somit eine geringe Impedanz des Sensors bei gleichzeitig hoher Elektrodenoberfläche. Als Referenzelektrode wird eine übliche Silber/Silberchloridelektrode verwendet, es eignen sich jedoch auch andere Elektroden konstanten Potentials wie Kalomel-, Antimon- oder Silber/Silberbromidelektroden.

Die Elektroden 14, 16 sind mit Kontaktflächen 18, 20 über Leiterbahnen 22, 24 verbunden, die vorzugsweise durch ein edelmetallhaltiges, härtbares Harz wie beispielsweise ein silberhaltiges Epoxidharz gebildet sind.

Die Elektroden 14, 16 sind vorzugsweise vollständig von einer gassensitiven und gaspermeablen Polymerschicht 26 überzogen, die als Elektrolyt fungiert und in Figur 1 als gestrichelter Bereich dargestellt ist. Die Polymerschicht 26 bildet eine Matrix, in der sich die für die Sensitivität des Sensors verantwortlichen Verbindungen befinden. In einer bevorzugten Ausführung besteht die Polymerschicht 26 aus einem Hydrogel oder einem Ethylcellulosegel. In diesen Gelen ist Wasser irreversibel gebunden.

Die Funktionsweise des Sensors beruht darauf, daß ein zu bestimmendes Gas, beispielsweise Kohlendioxid, von der Polymerschicht 26 absorbiert wird. Das Gas löst sich im gebundenen Wasser der Polymerschicht 26 und verändert deren pH-Wert. Da als Meßelektrode 14 eine pH-sensitive Elektrode eingesetzt wird, führt die Änderung des pH-Werts zu einer Änderung des Potentials an der Meßelektrode 14. Die Potentialänderung kann als sich verändernde Spannung zwischen Meß- und Referenzelektrode 14, 16 erfaßt werden. Die Meßelektrode 14 kann jegliche Ausführungsform annehmen, die geeignet ist, eine pH-Wert-Änderung der Umgebung ausreichend genau zu erfassen. Besonders geeignet sind leitfähige Metalloxid-pH-Elektroden, die beispielsweise eine Oberflächenschicht gemischter Iridiumoxide (IrOₓ) oder Rutheniumoxide (RuOₓ) aufweisen. Es eignen sich aber auch Platin- und Rhodiumelektroden.

Um in der Luft vorhandene saure Gase, also Gase wie Kohlendioxid, Stick- oder Schwefeloxide, die in Kontakt mit Wasser zu einer sauren Lösung führen, möglichst rasch und in ausreichender Menge in der Polymerschicht 26 absorbieren zu können, enthält diese vorzugsweise eine starke Base wie beispielsweise Tetraalkylammoniumhydroxide wie Tetraoctylammoniumhydroxid oder Tetraalkylammoniumhydrogencarbonate. Diese erhöhen die Löslichkeit der sauren Gase in Wasser, das in der Polymerschicht 26 gebunden ist, durch Entzug des beim Lösungsvorgang entstehenden Säure.

Zur Herstellung des Sensors 10 wird auf das Substrat 12 eine vorzugsweise keramische und metallische Komponenten enthaltende Elektrodenpaste, ein sogenanntes Cermet, aufgebracht und mit dem keramischen Substrat 12 gesintert. Auf die Elektrodenanordnung wird die Polymerschicht 26 aufgebracht, indem eine das Polymer, eine Base und sonstige Zusätze enthaltende Lösung aufgetragen oder aufgedruckt und das Lösungsmittel entfernt wird. Die Polymerschicht weist eine Schichtdicke von 10 bis 100 µm. vorzugsweise zwischen 20 und 40 µm auf.

Die Kontaktierung der Elektroden 14, 16 erfolgt über Leiterbahnen 22, 24, die entweder ebenfalls als Cermet in einem Schritt mit den Elektroden 14, 16 ausgeführt werden oder durch Aufdruck einer ein härtbares Harz und eine Edelmetallkomponente enthaltenden Lösung und anschließender Härtung derselben. Bevorzugt ist die Verwendung eines silberhaltigen Epoxidharzes.

Die Erfindung ist nicht auf das beschriebene Ausführungsbeispiel beschränkt, sondern es sind neben dem beschriebenen Sensor auch weitere Ausführungsformen denkbar. So kann beispielsweise eine Aktivkohleschicht auf der Polymerschicht 26 vorgesehen sein, um den Zutritt von die Polymerschicht 26 schädigende Gase wie Stick- oder Schwefeloxide zu vereindern. Weiterhin kann beispielsweise zusätzlich eine Temperaturmesseinheit zur Kompensation von Temperatureinflüssen auf die gemessenen Potentialdifferenzen vorgesehen sein.

## Patentansprüche

1. Sensor zur Bestimmung der Konzentration eines Gases in Gasgemischen, mit einer Mess- und einer Referenzelektrode, die auf einem Substrat (12) aufgebracht ist, und mit einer Polymerschicht, die in Kontakt mit dem Gasgemisch und der Messelektrode steht, wobei als Messelektrode (14) eine pH-sensitive Elektrode vorgesehen ist, **dadurch gekennzeichnet, dass** die Polymerschicht (26) als Base eine quarternäre Ammoniumverbindung enthält, wobei das zu bestimmende Gas von der Polymerschicht (26) absorbiert wird.

2. Sensor nach Anspruch 1, **dadurch gekennzeichnet, dass** die Messelektrode (14) ein Iridiumoxid aufweist.

3. Sensor nach Anspruch 1 oder 2, **dadurch gekennzeichnet, dass** die Messelektrode (14) durch die Polymerschicht (26) zumindest weitgehend vom Gasgemisch abgeschirmt ist.

4. Sensor nach einem der Ansprüche 1 bis 3, **dadurch gekennzeichnet, dass** die Mess- und/oder Referenzelektrode (14, 16) als Interdigitalelektrode ausgebildet ist.

5. Sensor nach einem der vorhergehenden Ansprüche, **dadurch gekennzeichnet, dass** die Polymerschicht Ethylcellulose enthält.

6. Verfahren zur Herstellung eines Sensors zur Bestimmung der Konzentration eines Gases in Gasgemischen, mit mindestens zwei Elektroden, die auf einem keramischen Substrat aufgebracht sind, und einer Polymerschicht, **dadurch gekennzeichnet, dass** in einem ersten Schritt auf dem keramischen Substrat die Elektroden (14, 16) durch Aufbringen einer entsprechenden Elektrodenpaste und einer anschließenden Hitzebehandlung erzeugt werden und in einem zweiten Schritt die Polymerschicht (26) durch Auftrag einer entsprechenden, eine quarternäre Ammoniumverbindung enthaltenden Polymerlösung auf das Substrat (12) und/oder die Elektroden (14, 16) und anschließendem Entfernen des Lösungsmittels aufgebracht wird.

7. Verfahren nach Anspruch 6, **dadurch gekennzeichnet, dass** die Polymerschicht (26) eine Dicke von 10 bis 50 µm aufweist.

8. Verfahren nach Anspruch 6 oder 7, **dadurch gekennzeichnet, dass** in einem dritten Schritt die Elektroden (14, 16) mittels einem härtbaren, edelmetallhaltigen Polymer kontaktiert werden.

9. Verfahren nach einem der Ansprüche 6 bis 8, **dadurch gekennzeichnet, dass** ein Sensor nach einem der Ansprüche 1 bis 5 hergestellt wird.

10. Verwendung des Sensors nach einem der Ansprüche 1 bis 5 als sensitives Element in Brandmeldern und/oder Luftgütesensoren.

## Claims

1. Sensor for determining the concentration of a gas in gas mixtures, having a measuring electrode and a reference electrode, which is applied to a substrate (12), and having a polymer layer, which is in contact with the gas mixture and the measuring electrode, a pH-sensitive electrode being provided as measuring electrode (14), **characterized in that** the polymer layer (26) contains as base a quaternary ammonium compound, with the gas that is to be determined being absorbed by the polymer layer (26).

2. Sensor according to Claim 1, **characterized in that** the measuring electrode (14) includes an iridium oxide.

3. Sensor according to Claim 1 or 2, **characterized in that** the measuring electrode (14) is at least substantially shielded from the gas mixture by the polymer layer (26).

4. Sensor according to one of Claims 1 to 3, **characterized in that** the measuring electrode (14) and/or the reference electrode (16) is formed as an interdigitated electrode.

5. Sensor according to one of the preceding claims, **characterized in that** the polymer layer contains ethylcellulose.

6. Process for producing a sensor for determining the concentration of a gas in gas mixtures, having at least two electrodes applied to a ceramic substrate, and having a polymer layer, **characterized in that** in a first step the electrodes (14, 16) are produced on the ceramic substrate by applying a suitable electrode paste followed by a heat treatment, and in a second step the polymer layer (26) is applied by applying a suitable polymer solution containing a quaternary ammonium compound to the substrate (12) and/or the electrodes (14, 16) and then removing the solvent.

7. Process according to Claim 6, **characterized in that** the thickness of the polymer layer (26) is from 10 to 50 µm.

8. Process according to Claim 6 or 7, **characterized in that** in a third step the electrodes (14, 16) are contact-connected by means of a hardenable polymer with a precious metal content.

9. Process according to one of Claims 6 to 8, **characterized in that** a sensor according to one of Claims 1 to 5 is produced.

10. Use of the sensor according to one of Claims 1 to 5 as the sensitive element in fire alarms and/or air quality sensors.

## Revendications

1. Capteur permettant de déterminer la concentration d'un gaz dans des mélanges de gaz, comportant une électrode de mesure et de référence appliquée sur un substrat (12), et comportant une couche polymère en contact avec le mélange de gaz et l'électrode de mesure, l'électrode de mesure prévue (14) étant une électrode sensible au pH,
**caractérisé en ce que**
la couche polymère (26) contient, comme base, un composé d'ammonium quaternaire, le gaz à déterminer étant absorbé par la couche polymère (26).

2. Capteur selon la revendication 1,
**caractérisé en ce que**
l'électrode de mesure (14) présente un oxyde d'iridium.

3. Capteur selon la revendication 1 ou 2,
**caractérisé en ce que**
l'électrode de mesure (14) est séparée, du moins largement, du mélange de gaz par la couche polymère (26).

4. Capteur selon l'une quelconque des revendications 1 à 3,
**caractérisé en ce que**
l'électrode de mesure et/ou de référence (14, 16) est une électrode à structure interdigitale.

5. Capteur selon l'une quelconque des revendications précédentes,
**caractérisé en ce que**
la couche polymère contient de l'éthylcellulose.

6. Procédé de fabrication d'un capteur permettant de déterminer la concentration d'un gaz dans des mélanges de gaz, comportant au moins deux électrodes appliquées sur un substrat céramique, et une couche polymère,
**caractérisé en ce que**
dans une première étape, les électrodes (14, 16) sont produites sur le substrat céramique en appliquant une pâte pour électrodes correspondante et un traitement thermique subséquent et, dans une deuxième étape, on applique la couche polymère (26) en appliquant une solution correspondante contenant un composé d'ammonium quaternaire sur le substrat (12) et/ou les électrodes (14, 16), et en éliminant ensuite le solvant.

7. Procédé selon la revendication 6,
**caractérisé en ce que**
la couche polymère (26) présente une épaisseur de 10 à 50 µm.

8. Procédé selon la revendication 6 ou 7,
**caractérisé en ce que**
dans une troisième étape, on met les électrodes (14, 16) en contact au moyen d'un polymère durcissable contenant un métal noble.

9. Procédé selon l'une quelconque des revendications 6 à 8,
**caractérisé en ce qu'**
on fabrique un capteur selon l'une quelconque des revendications 1 à 5.

10. Utilisation du capteur selon l'une quelconque des revendications 1 à 5, en tant qu'élément sensible dans des alarmes incendie et/ou des capteurs de la qualité de l'air.
